Europäisches Patentamt

European Patent Office

Office européen des brevets

(19)

(11) **EP 0 392 287 B1**

(12) EUROPEAN PATENT SPECIFICATION

(45) Date of publication and mention
of the grant of the patent:
**03.07.1996 Bulletin 1996/27**

(51) Int Cl.6: **G06F 17/14**

(21) Application number: **90106115.0**

(22) Date of filing: **30.03.1990**

(54) **Fourier transform method using number theoretic transforms**

Fourier-Transformationsmethode mit Benutzung zahlentheoretischer Transformationen

Méthode de transformation de Fourier utilisant des transformées de la théorie des nombres

(84) Designated Contracting States:
**CH DE ES FR GB IT LI SE**

(30) Priority: **31.03.1989 US 331463**

(43) Date of publication of application:
**17.10.1990 Bulletin 1990/42**

(73) Proprietor: **Hughes Aircraft Company**
**Los Angeles, California 90045-0066 (US)**

(72) Inventor: **Nowakowski, Michael V.**
**Los Angeles, California 90066 (US)**

(74) Representative: **Witte, Alexander, Dr.-Ing.**
**Witte, Weller, Gahlert, Otten & Steil,**
**Patentanwälte,**
**Rotebühlstrasse 121**
**D-70178 Stuttgart (DE)**

(56) References cited:
- **PROCEEDINGS OF THE IEEE INTERNATIONAL CONFERENCE ON SIGNALS, SYSTEMS AND COMPUTERS 10-12 November 1986, pages 43-47, Pacific Grove, CA, US; H. LIU et al.: "Computing Multidimensional Discrete Fourier Transform Using Fermat Number Transform"**
- **PROCEEDINGS ON THE IEEE INTERNATIONAL CONFERENCE ON SIGNALS, SYSTEMS AND COMPUTERS 10-12 November 1986. pages 25-29, Pacific Grove, CA, US; H. CHUNG: "A New 1-D FFT Algorithm Requiring Only One Data Pass"**
- **IEE PROCEEDINGS vol. 130, part F, no. 5, August 1983, pages 423-432; T.E. CURTIS et al.: "Hardware-based Fourier transforms: algorithms and architectures"**

## Description

This invention pertains to the field of signal processing and, more particularly, to an improved method for computing fast fourier transforms.

In many signal processing areas, and particularly in the area of airborne radar, it is desirable to perform fast fourier transforms (FFTs). FFTs are necessary to convert radar signal pulses received in the time domain to the frequency domain and back again. Many types of signal processing, including pulse compression decoding, can be done in the frequency domain more quickly.

In airborne radar systems, the signal processing equipment should be carried on board the airplane. However, space and power are strictly limited onboard an aircraft. Accordingly, it is important to minimize the size and power consumption of the signal processing equipment. Since FFT engines constitute a substantial part of a radar system's signal processing equipment, it is important to simplify the mathematical operations required to perform FFTs as much as possible. This not only reduces the total amount of equipment required, but the cost of a digital radar system can also be reduced by using the same hardware for different operations and by using identical hardware for different systems.

Speed is also very important in airborne radar. A modern airplane and its targets fly quickly and collect vast amounts of radar information. In order for the aircraft crew to benefit from the information, it must be processed quickly enough for the crew to respond and quickly enough to make room for new information. The simpler the mathematical operations necessary to process the incoming information, the faster the processing can be performed.

Existing FFT engines, based most commonly on the Cooley-Tukey method, require a significant amount of hardware. Since FFTs must normally be performed several times in digital signal processing, this hardware constitutes a substantial part of the entire radar system. A meaningful reduction in the amount of hardware required and in the time it takes for the hardware to operate is of great benefit in the field.

The method of Number Theoretic Transforms, and specifically of Fermat Number Transforms, is already known in the art, see Hulin Liu and Arif Ghafoor, Computing Multidimensional Discrete Fourier Transforms using Fermat Number Transform, Proceedings of the IEEE International Conference on Signals, Systems and Computers, November 10 - 12, 1985, page 43 - 47.

Hwang Chung, A New 2-D FFT Algorithm Requiring only one Data Pass, Proceedings of the IEEE International Conference on Signals, Systems and Computers, November 10 - 12, 1986, page 25 - 29, already describes the steps of performing a 2-dimensional Discrete Fourier Transformation (DFT), namely to apply DFT to the rows and then perform a DFT on the columns of the result. However, as applied to a frequency transformation using DFT and not to a convolution, this method has the known disadvantages, in particular with respect to the number of required multiplications.

In view of this, it is an object of the present invention to provide a method of performing a Fourier transformation with digital computing equipment in a signal processing system for processing pulse descriptor words which can be performed very fast.

According to the invention, this object is achieved by the following steps:

a) mapping the pulse descriptor words into a matrix;
b) performing a first convolution on one dimension of the matrix by

b1) applying a number theoretic transform to said matrix,
b2) multiplying the result of step b1) with a first 1-dimensional matrix ($H(k_1)$),
b3) applying an inverse number theoretic transform to the result of step b2),

c) performing a second convolution on another dimension of the matrix by

c1) applying a number theoretic transform to said matrix,
c2) multiplying the result of step c1) with a second 1-dimensional matrix ($H(k_2)$),
c3) applying an inverse number theoretic transform to the result of step c2).

To summarize, the present invention employs number theoretic transforms for performing the convolutions which make up the fourier transformation. More specifically, the present invention, in an exemplary embodiment, when exposed to incoming pulse descriptor words, sorts the words into a matrix and then performs two convolutions using number theoretic transforms. In the two convolutions, the pulse descriptor words of the matrix are multiplied by chirp and mixing factors and are then encoded. Next, a forward number theoretic transform, followed by an inverse number theoretic transform, are performed using Fermat numbers. Then, the pulse descriptor words are decoded and multiplied by chirp and mixing factors. The first convolution is performed on one dimension of the matrix, and the second convolution is performed on the other dimension of the matrix. In between the convolutions, a twiddle factor is applied to each of the terms.

In another embodiment of the present invention, the pulse descriptor words are exposed to doppler tuning filters after they have been sorted into a matrix, but before the first convolution. After the second convolution, they are exposed to a pulse compression filter and then routed back through the two convolutions again.

FIG. 1 is a block diagram of a radar receiving and processing system incorporating the present invention;

FIG. 2 is a block diagram of the method of the present invention as applied to performing fast fourier transforms; and

FIG. 3 is a block diagram of the method of the present invention as applied to pulse compression filtering.

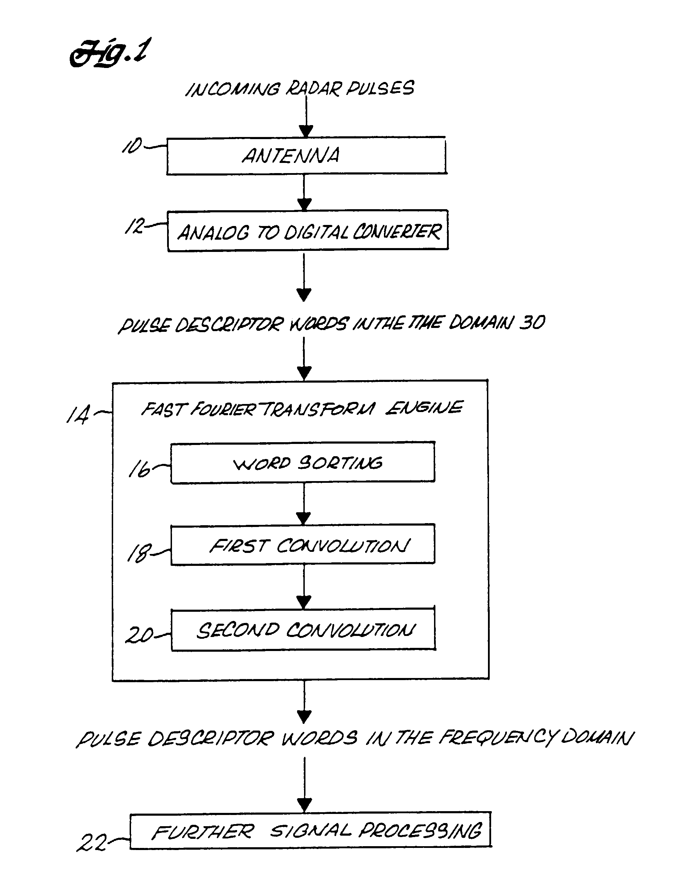

The present invention applies number theoretic transforms to perform fast fourier transforms in digital signal processing. Fast fourier transforms are used extensively in digital radar among other places. FIG. 1 shows a typical digital radar signal processing system employing the invention.

Radar signals are received as electromagnetic wave pulses by an antenna 10 and converted to analog voltage signals. The method can be easily adapted to other types of signals, for example, sonar and laser signals, by modifying the antenna and the converters. An analog to digital converter 12 samples the analog signal and converts it to digital pulse descriptor words which describe the amplitude of the signal after each sampling interval. The pulse descriptor words can be digitally analyzed in a variety of ways.

The words produced by the analog to digital converter 12 describe the received radar signal pulses as a function of amplitude and time. To completely analyze the signal, however, words describing the frequency of the received signals as a function of time must be generated. This is done by the fast fourier transform engine 14. The output of the fast fourier transform engine 14 is then sent on for further signal processing.

In airborne radar the fast fourier transform engine would be made of specially dedicated digital processing equipment in order to maximize speed but minimize size and weight. However, the same method can be performed on a general purpose computer.

The fast fourier transforms of the present invention are performed by first, sorting the words 16 so that the words can be conveniently addressed; second, performing a first convolution 18; and third, performing a second convolution 20. After the two convolutions, the group of pulse descriptor words describe the pulses in the frequency domain.

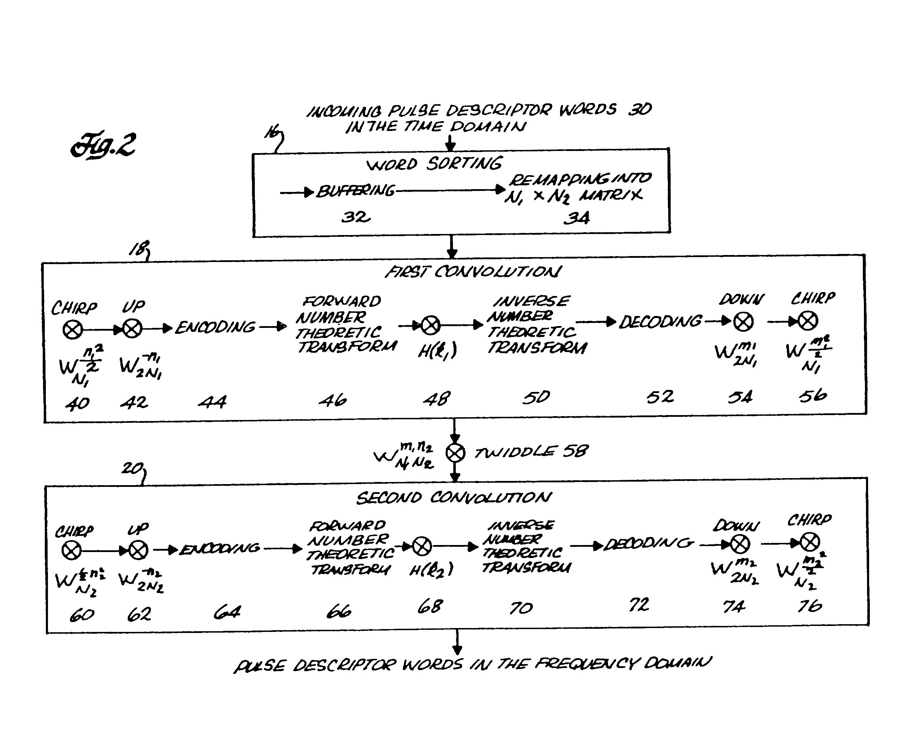

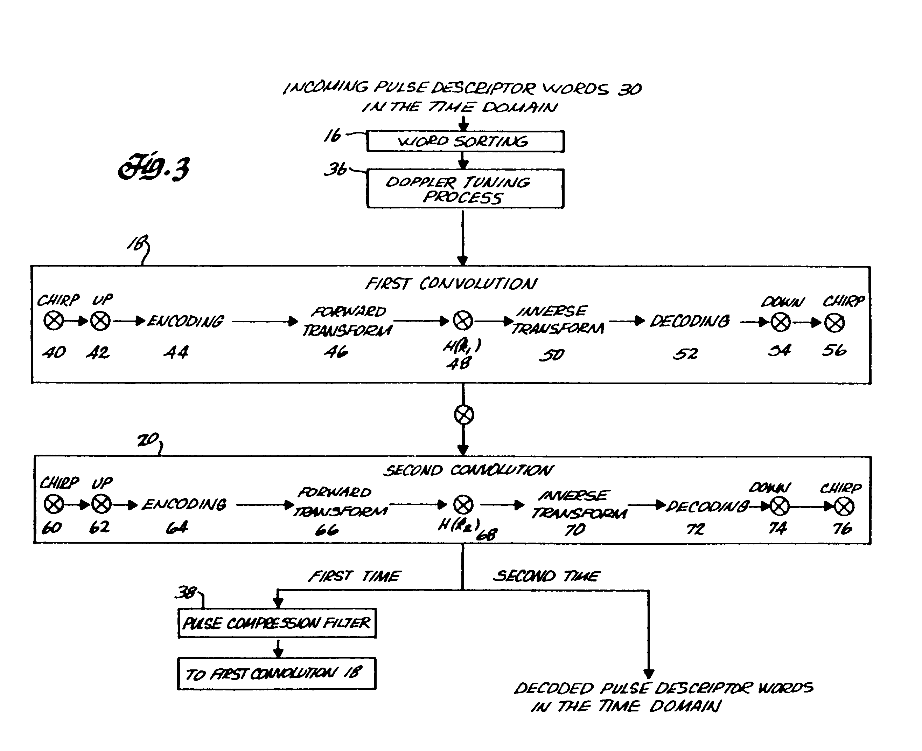

Fast fourier transform engines are used in many other ways in digital signal processing, including in doppler filters and in decoding compressed pulses. While these different uses require a slightly different process, the fast fourier transform engine of the present invention is equally well adapted to perform fourier transforms in any of these and other applications. It operates similarly in all cases. FIGS. 2 and 3 show the operation of the present invention in two different applications.

FIG. 2 shows, in block diagram form, the operations required to practice the method of a preferred embodiment of the present invention. This application of a preferred embodiment is similar to that shown in FIG. 1. In this embodiment, incoming pulse descriptor words describe doppler frequencies of radar pulses in the time domain. Each word has two parts. These will be called the real part and the imaginary part, respectively. The parts may correspond to real and imaginary components, or to in-phase and quadrature components, or any other two components of a signal. The invention may be practiced using words with more or fewer parts, but this description is directed to two part words.

In the embodiments of FIGS. 1 and 2, the present invention performs a fast fourier transform, transforming the pulse descriptor words from the time domain to the frequency domain. Performing the same process again transforms the words back into the time domain. In the embodiment of FIG. 3, the invention is adapted to incorporate a pulse compression filter which operates in the frequency domain and then convert the filtered signals back into the time domain.

To perform a fast fourier transform as shown in FIG. 2, the method of the present invention begins with word sorting 16. Word sorting maps the incoming stream of pulse descriptor words into a two-dimensional matrix. As the incoming words are received, they are buffered at step 32 and arranged in rows of $N_2$ words each until $N_1$ rows of $N_2$ words are received. Originally, each word $x(t)$ is identified by the time it was received. That is, $x(0), x(1)$ . . . identifies words received at time zero (t=0), time one (t=1), etc. But, after the mapping, each word $x(n_1, n_2)$ can be identified by its row ($n_1$) and its column ($n_2$), e.g., $x(0,0), x(0,1)$ refer to the words in row 1, column 1 and row 1, column 2, respectively. The last word in the matrix was received at time $N_1 N_2 (t=N_1 N_2)$ with respect to the first word and is identified as $x(N_1-1, N_2-1)$. $N_1$ and $N_2$ remain constant throughout the transform, but have a value equal to a power of 2.

The format of the two-dimensional $N_1 x N_2$ matrix is shown in Table 1 below. A three, four, or more dimensional matrix may be used instead, if appropriate changes are made in the other steps.

## TABLE 1

### MAPPING PULSE DESCRIPTOR WORDS
### INTO $N_1 \times N_2$ MATRIX X

| | $n_2 = 0$ | $n_2 = 1$ | $n_2 = 2$ | $n_2 = 3 \ldots \ldots n_2 = N_2 - 1$ |
|---|---|---|---|---|
| $n_1 = 0$ | $x(0)$ | $x(1)$ | $x(2)$ | $x(3) \; . \; . \; . x(N_2 - 1)$ |
| $n_1 = 1$ | $x(N_2)$ | $x(N_2 + 1)$ | $x(N_2 + 2)$ | $x(N_2 + 3) \; . \; x(2N_2 - 1)$ |
| $n_1 = 2$ | $x(2N_2)$ | . . . | | |
| $n_1 = N_1 - 1$ | $x((N_1 - 1)N_2)$ | . . . | | $x(N_1 N_2 - 1)$ |

After the remapping, all the terms of the matrix are processed as a group, in parallel. When the processing is completed, a new matrix has been mapped out, and it is processed. The buffer 32 allows incoming words to be held until the preceding matrix is out of the way.

The remapped terms begin with the first convolution 18. The first step 40 is multiplication by a chirp factor. Chirp factors are well known in the art, and, as shown in FIG. 2, the chirp factor for step 40 is

$$W_{N_1}^{\frac{1}{2}n_1^2} = e^{-j2\pi(\frac{1}{2}n_1^2/N_1)}.$$

This term is simply e raised to an exponent which varies for each row as a function of $n_1$. $N_1$ is a constant for each matrix. For example, if 32 words have been mapped into a 4x8 matrix, then every word in the first row ($n_1 = 0$) of the matrix, $x(0,0)$ through $x(0,7)$ would be multiplied by

$$e^{-j2\pi(\frac{1}{2} \cdot 0^2/4)} = 1.$$

Every word in the bottom row, $n_1 = 3$ of the matrix, $x(3,0)$ through $x(3,7)$ would be multiplied by

$$e^{-j2\pi(\frac{1}{2} \cdot 3^2/4)} = e^{-j9\pi/4}$$

Next, at step 42, each term is multiplied by a mixing factor. A mixing factor is applied at the beginning, steps 42, 62, and the end, steps 54, 74, of each convolution 18, 20. The beginning mixing factor is called the up factor 42, 62, and the ending mixing factor is called the down factor 54, 74. FIGS. 2 and 3 identify all multiplications using the same notation. The up factor at step 42 is

$$W_{2N_1}^{-n_1} = e^{-j2\pi(-n_1/2N_1)}.$$

The exact value of the up factor for each row varies as a function of $n_1$.

Next, at step 44, the matrix $X(n_1, n_2)$ is encoded into matrix $A(n_1, n_2)$. The process can be described by the following equations:

$$ar(n_1, n_2) = xr(n_1, n_2) - xi(n_1 + \tfrac{1}{2}N_1, n_2), \quad 0 \leq n_1 \leq \tfrac{1}{2}N_1 - 1 \tag{1}$$

$$ar(n_1, n_2) = xr(n_1, n_2) + xi(n_1 - \tfrac{1}{2}N_1, n_2), \quad \tfrac{1}{2}N_1 \leq n_1 \leq N_1 - 1 \tag{2}$$

$$ai(n_1, n_2) = xr(n_1, n_2) + xi(n_1 + \tfrac{1}{2}N_1, n_2), \quad 0 \leq n_1 \leq \tfrac{1}{2}N_1 - 1 \tag{3}$$

$$ai(n_1, n_2) = xr(n_1, n_2) - xi(n_1 - \tfrac{1}{2}N_1, n_2), \quad \tfrac{1}{2}N_1 \leq n_1 \leq N_1 - 1 \tag{4}$$

Equations 1 and 3 are applied to the top half of the matrix, i.e., rows 0 through $\tfrac{1}{2}N_1 - 1$. Equations 2 and 4 are applied to the bottom half of the matrix, i.e., rows $\tfrac{1}{2}N_1$ through $N_1 - 1$. The real part of each word is identified by $xr(n_1, n_2)$, and the imaginary part by $xi(n_1, n_2)$. So, equations 1 and 2 are applied to find the real parts, and equations 3 and 4 are applied to find the imaginary parts of each word in matrix A. After the encoding, the real and imaginary parts of matrix A are not truly real and imaginary, but sums of the original words' parts. However, "real" and "imaginary" will be used to refer to the two parts of each word in the matrix for simplicity.

Using the 4x8 matrix referred to above as an example, equations 1 and 3 give the values for the first two encoded rows, $n_1=0$ and $n_1=1$. The real part of the top left-hand word ar(0,0) in the matrix A is the difference between the real part of the top left-hand word xr(0,0) and the imaginary part of the left-hand term of the third row xi(2,0). Similarly, the imaginary term of the encoded top left-hand word ai(0,0) is given by the sum of the same two terms, xr(0,0) + xi(2,0).

The values for the bottom two rows of the 4x8 matrix, $n_1=2$ and $n_1=3$, are given by equations 2 and 4 so that the real part of the bottom right-hand word of matrix A, $a_r(3,7)$, would be given by the sum of the real term in that place in matrix X, xr(3,7), and the imaginary term in the last row of the top half of matrix X, xi(1,7). The imaginary term, ai(3,7), is given by the difference between the same terms, xr(3,7)-xi(1,7).

After both terms of every word are encoded, the first forward number theoretic transform is performed, step 46. The number theoretic transform in this case is a series of summations down the columns of matrix A. The transformed matrix is called matrix $B(k_1,n_2)$.

$$br(k_1,n_2) = \sum_{n_1=0}^{N_1-1} ar(n_1,n_2)g^{n_1 k_1} \text{ modulo } q \qquad (5)$$

$$bi(k_1,n_2) = \sum_{N_1=0}^{N_1-1} ai(n_1,n_2)g^{n_1 k_1} \text{ modulo } q, \qquad (6)$$

where q is the chosen integer field. In this case, $2^{32}+1$ is chosen because of the 32 bit length of the pulse descriptor words. The root g is equal to $2^{64/N_1}$.

Equation 5 gives the values for the real parts of matrix B, and equation 6 gives the values for imaginary parts of matrix B. $k_1$ denotes the rows of the matrix. According to equation 5, to obtain the real part of the top left-hand word of the transformed 4x8 matrix B, for example, br(0,0), the sum is taken of products containing the real part of each term in the left-hand, $n_2=0$, column.

$$br(0,0) = \sum_{n_1=0}^{N_1-1} ar(n_1,0) \text{ modulo } q$$

Performing the summation for all possible values of $n_1$ for both real and imaginary parts makes the transformation.

The next step 48 is to multiply each term in each column of the transformed matrix $B(k_1,n_2)$ by the corresponding terms of a $1 \times N_1$ matrix, $H(k_1)$. $H(k_1)$ is determined just like $B(k_1,n_2)$ is determined, however, $H(k_1)$ begins with all values equal to 1.

$H(k_1)$ is initially a $1 \times N_1$ matrix, $H(n_1)$, in which every term is equal to 1, i.e.,

$$hr(n_1) = 1, hi(n_1) = 1, 0 \leq n_1 \leq N_1-1. \qquad (7)$$

Each term is multiplied by the chirp factor

$$\overline{W}_{N_1}^{\frac{1}{2}n_1^2},$$

and the up factor

$$W_{2N_1}^{-n_1},$$

as explained above, with respect to the pulse descriptor words. Then, it is encoded according to the following equations:

$$HR(n_1) = hr(n_1) - hi(n_1 + \tfrac{1}{2}N_1), 0 \leq n_1 \leq \tfrac{1}{2} > N_1 - 1 \qquad (8)$$

$$HR(n_1) = hr(n_1) + hi(n_1 - \tfrac{1}{2}N_1), \tfrac{1}{2}N_1 \leq n_1 \leq N_1 - 1 \qquad (9)$$

$$HI(n_1) = hr(n_1) + hi(n_1 + \tfrac{1}{2}N_1), 0 \leq n_1 \leq \tfrac{1}{2}N_1 - 1 \qquad (10)$$

$$HI(n_1) = hr(n_1) - hi(n_1 - \tfrac{1}{2}N_1), \tfrac{1}{2}N_1 \leq n_1 \leq N_1 - 1 \tag{11}$$

Equations 8-11 are analogous to equations 1-4 and are applied in the same way, except that since $h(k_1)$ is one dimensional, the equations do not contain $n_2$.

Finally, the same number theoretic transform process applied to matrix $A(n_1,n_2)$ is applied to $H(n_1)$, converting it to $H(k_1)$. More specifically, each term is replaced by a sum as follows:

$$HR(k_1) = \sum_{n_1=0}^{N_1-1} HR(n_1)g^{n_1 k_1} \text{ modulo } q \tag{12}$$

$$HI(k_1) = \sum_{n_1=0}^{N_1-1} HI(n_1)g^{n_1 k_1} \text{ modulo } q \tag{13}$$

Having obtained the two parts for each element in the one dimensional matrix $H(k_1)$, the multiplication step 48 can be performed. Each term in matrix $B(k_1,n_2)$ is multiplied by the term in the one dimensional matrix $H(k_1)$ with the same value for $k_1$. Real parts are multiplied together, and the imaginary parts are multiplied together, but there are no cross products. The same set of values of $H(k_1)$ are applied to every column of matrix $B(k_1,n_2)$. The resulting matrix is called $C(k_1,n_2)$.

Next, the inverse number theoretic transform step 50 is performed on matrix $C(k_1,n_2)$. This step is performed in exactly the same way as the number theoretic transform step 46, except that the exponential factor is raised to a negative power.

In other words, the value of each term in matrix $D(m_1,n_2)$, for $k_1$ ranging from 0 to $N_1-1$, and $n_2$ ranging from 0 to $N_2-1$, is determined according to the following equations:

$$dr(m_1,n_2) = \sum_{k_1=0}^{N_1-1} cr(k_1,n_2)g^{-m_1 k_1} \text{ modulo } q \tag{14}$$

$$di(m_1,n_2) = \sum_{k_1=0}^{N_1-1} ci(k_1,n_2)g^{-m_1 k_1} \text{ modulo } q \tag{15}$$

At step 52, the resultant matrix $D(m_1,n_2)$ is decoded. The decoding can be described as follows:

$$fr(m_1,n_2) = \tfrac{1}{2}[dr(m_1,n_2)+di(m_1,n_2)], \; O \leq m_1 \leq N_1-1 \tag{16}$$

$$fi(m_1,n_2) = \tfrac{1}{2}[dr(m_1+\tfrac{1}{2}N_1,n_2)-di(m_1+\tfrac{1}{2}N_1,n_2)], \; O \leq m_1 \leq \tfrac{1}{2}N_1-1 \tag{17}$$

$$fi(m_1,n_2) = \tfrac{1}{2}[di(m_1-\tfrac{1}{2}N_1,n_2)-dr(m_1-\tfrac{1}{2}N_1,n_2)], \; \tfrac{1}{2}N_1 \leq m_1 \leq N_1-1 \tag{18}$$

The equations are applied like the equations used to describe the encoding step 44. For example, in the 4x8 matrix discussed above, the top left word $d(0,0)$ is decoded in two steps. The real part $fr(0,0)$ is one-half the sum of $dr(0,0)+di(0,0)$, applying equation 16. The imaginary part, $fi(0,0)$, equals one-half the sum, $dr(2,0)-di(2,0)$, applying equation 17. The bottom right hand word at $(3,7)$ also has two parts: $fr(3,7) = \tfrac{1}{2}[dr(3,7)+di(3,7)]$; $fi(3,7) = \tfrac{1}{2}[di(1,7)-dr(1,7)]$. The factor of $\tfrac{1}{2}$ is a scaling factor with no physical meaning. It is included only to allow the output of this algorithm to equal exactly (not scaled) the output of conventional algorithms.

The first convolution 18 is completed by the final multiplication by a down mixing factor, step 54, and a chirp factor, step 56. These are performed in the same way as the chirp and up multiplications, steps 40, 42. The down multiplication 54 multiplies each term, real and imaginary, by

$$W_{2N_1}^{m_1} = e^{-j2\pi(m_1/2N_1)},$$

where $m_1$ depends on the address of the term.

The chirp multiplication 56 is performed by multiplying each term by

$$W_{N_1}^{\frac{1}{2}m_1^2} = e^{-j2\pi(\frac{1}{2}m_1^2/N_1)}.$$

The next multiplication, step 58, uses a twiddle factor. This factor

$$W_{N_1 N_2}^{m_1 n_2} = e^{-j2\pi(m_1 n_2/N_1 N_2)}.$$

varies for every word in the matrix, as it depends on both $m_1$ and $n_2$. Each and every term in the matrix is multiplied by this factor.

The first convolution 18 was based on the columns of the original matrix $X(n_1,n_2)$. The second convolution 20 repeats the steps, applying them to the rows. Since the operations are identical, they will be described only briefly. More information can be obtained by referring to the corresponding step in the discussion above for the first convolution 18.

The process begins with the $N_1 \times N_2$ matrix $F(m_1,n_2)$ after the multiplication steps 54, 56, 58. Each word of the matrix, $f(m_1,n_2)$, has a real part, $fr(m_1,n_2)$, and an imaginary part, $fi(m_1,n_2)$. Again, "real" and "imaginary" are used as a convenience. The first step 60 is multiplication by a chirp factor:

$$W_{N_2}^{\frac{1}{2}n_2^2} = e^{-j2\pi(\frac{1}{2}n_2^2/N_2)},$$

which varies as a function of $n_2$, and not $n_1$ as in the corresponding step 40.

The second step, step 62, is multiplication of both parts of every word in matrix F by an up mixing factor.

$$W_{2N_2}^{-n_2} = e^{-j2\pi(-n_2/2N_2)},$$

At step 64, the matrix is encoded. The equations 19-22, below, describe the encoding, using the same conventions as equations 1-4 above.

$$pr(m_1,n_2) = fr(m_1,n_2) - fi(m_1,n_2 + \tfrac{1}{2}N_2),\ 0 \leq n_2 \leq \tfrac{1}{2}N_2\text{-}1 \tag{19}$$

$$pr(m_1,n_2) = fr(m_1,n_2) + fi(m_1,n_2 - \tfrac{1}{2}N_2),\ \tfrac{1}{2}N_2 \leq n_2 \leq N_2\text{-}1 \tag{20}$$

$$pi(m_1,n_2) = fr(m_1,n_2) + fi(m_1,n_2 + \tfrac{1}{2}N_2),\ O \leq n_2 \leq \tfrac{1}{2}N_2\text{-}1 \tag{21}$$

$$pi(m_1,n_2) = fr(m_1,n_2) - fi(m_1,n_2 - \tfrac{1}{2}N_2),\ \tfrac{1}{2}N_2 \leq n_1 \leq N_2\text{-}1 \tag{22}$$

Following this, a forward number theoretic transform is performed, step 66, according to equations 23 and 24. Again, the application of these equations is identical to that described for step 46, equations 5 and 6 above, except that it applies to $n_2$, instead of $n_1$.

$$qr(m_1,k_2) = \sum_{n_2=0}^{N_2-1} pr(m_1,n_2)g^{n_2 k_2}\ \text{modulo}\ q \tag{23}$$

$$qi(m_1,k_2) = \sum_{N_2=0}^{N_2-1} pi(m_1,n_2)g^{n_2 k_2}\ \text{modulo}\ q, \tag{24}$$

Next, at step 68, both parts of every term of the new matrix $Q(m_1,k_2)$ are multiplied by the corresponding terms of a one dimensional matrix $H(k_2)$. The $H(k_2)$ matrix used at step 68 is created identically like the $H(k_1)$ matrix used at step 48, except that it varies as a function of $k_2$ and not $k_1$. Accordingly, corresponding $k_2$ terms are multiplied together, rather than corresponding $k_1$ terms.

Next, step 70, an inverse number theoretic transform is performed. This resembles the transform performed at step 50 and can be described using equations 25 and 26.

$$sr(m_1,m_2) = \sum_{k_2=0}^{N_2-1} qr(m_1,k_2)g^{-k_2 m_2} \text{ modulo } q \qquad (25)$$

$$si(m_1,m_2) = \sum_{k_2=0}^{N_2-1} qi(m_1,k_2)g^{-k_2 m_2} \text{ modulo } q, \qquad (26)$$

Next, the resulting matrix $S(m_1,m_2)$ is decoded at step 72 according to the equations below.

$$ur(m_1,m_2) = \tfrac{1}{2}[sr(m_1,m_2)+si(m_1,m_2)], \qquad O \leq m_2 \leq N_2-1 \qquad (27)$$

$$ui(m_1,m_2) = \tfrac{1}{2}[sr(m_1,m_2+\tfrac{1}{2}N_2)-si(m_1,m_2+\tfrac{1}{2}N_2)], \qquad O \leq m_2 \leq \tfrac{1}{2}N_2-1 \qquad (28)$$

$$ui(m_1,m_2) = \tfrac{1}{2}[si(m_1,m_2-\tfrac{1}{2}N_2)-sr(m_1,m_2-\tfrac{1}{2}N_2)], \quad \tfrac{1}{2}N_2 \leq m_2 \leq N_2-1 \qquad (29)$$

Finally, both the real and imaginary parts of the resulting $N_1 x N_2$ matrix $U(m_1,m_2)$ are multiplied by factors which vary as a function of $m_2$. In the down multiply step 74, both parts of each term are multiplied by a down mixing factor

$$W_{2N_2}^{m_2} = e^{-j2\pi(m_2/2N_2)}.$$

In the chirp multiply step, both parts of each term are multiplied by a chirp factor

$$W_{N_2}^{\tfrac{1}{2}m_2^2} = e^{-j2\pi(\tfrac{1}{2}m_2^2/N_2)}.$$

That concludes the fourier transform of the original two part pulse descriptor words. The resulting matrix $U(m_1,m_2)$ provides corresponding pulse descriptor words in the frequency domain. The words can be remapped from the matrix to a serial stream, if desired, before being transmitted to further signal processing.

As shown in FIG. 3, the present invention may also be adapted for use with a pulse compression filter. Pulse compression filters are more easily used in the frequency domain, so the pulse descriptor words must be transformed to the frequency domain and then transformed back to the time domain. The embodiment of FIG. 3 can be applied to pulse compression filters which decode any of the standard pulse compression codes. For example, Barker codes, complementary codes, and Frank codes. The steps shown in FIG. 3 are identical to like numbered steps in FIG. 2, but the sequence is modified.

As shown in FIG. 3, incoming pulse descriptor words are sorted by buffering and remapping into an $N_1 x N_2$ matrix, as in FIG. 2. Then, they undergo a doppler tuning process 36, as is well known in the art. The doppler tuning process 36 matches the pulse compression filter to a limited range of doppler frequencies. Typically, the range is several hundred Hertz. This is necessary for proper operation of the pulse compression filter 38. Other doppler frequency ranges are processed in parallel sequences. After the doppler tuning, the pulses are processed through both convolutions, steps 40-76. The pulses have, at that point, been transformed to the frequency domain, where they can be multiplied by the pulse compression filter 38, as is well known in the art.

After the pulse compression decoding, the pulse descriptor words are routed back through both convolutions, beginning with the chirp factor multiplication 40, to transform the words to the time domain. The resultant output of the last chirp factor multiplication 76 is the compression filtered signals in the time domain.

Alternatively, the output of the pulse compression filter could be routed directly to other signal processing tasks, rather than being routed through the first and second convolutions again. The output in this case would be decoded, or pulse compression filtered, but the pulse descriptor words would be in the frequency domain, as is sometimes required.

The method of the present invention enables a general purpose computer to perform the method in computing an FFT and pulse compression on simulated radar pulses and on random numbers.

The method of the present invention substantially reduces the number of multiplications necessary to perform an FFT, as compared to the Cooley-Tukey method commonly used. Table 2 compares the method of the present invention to the Cooley-Tukey method of computing FFTs. Table 2 lists the number of additions and multiplications and the total number of mathematical operations per point required to perform FFTs of various lengths and the pulse compression filter multiply. For a complete pulse compression convolution, the values in Table 2 should be doubled. Length refers to the number of pulse descriptor words processed at one time. For the present invention, as described in the examples above, the length of the FFT is the number of words in the matrix $N_1 N_2$.

TABLE 2

| F F T LENGTH | USING NUMBER TRANSFORMS | | | COOLEY-TUKEY | | |
|---|---|---|---|---|---|---|
| | ADDS | MULT | TOT | ADDS | MULT | TOT |
| 8 | 14 | 6 | 20 | 11 | 10 | 21 |
| 16 | 18 | 6 | 24 | 14 | 12 | 26 |
| 32 | 22 | 6 | 28 | 17 | 14 | 31 |
| 64 | 26 | 6 | 32 | 20 | 16 | 36 |
| 128 | 32 | 12 | 44 | 23 | 18 | 41 |
| 256 | 36 | 12 | 48 | 26 | 20 | 46 |
| 512 | 40 | 12 | 52 | 29 | 22 | 51 |
| 1024 | 44 | 12 | 56 | 32 | 24 | 56 |
| 2048 | 48 | 12 | 60 | 35 | 26 | 61 |
| 4096 | 52 | 12 | 64 | 38 | 28 | 66 |

As Table 2 indicates, the total number of operations remains about the same with both methods. However, the number of multiplications is reduced significantly in every case. This substantial reduction in multiplications results in an even greater reduction in the amount of hardware needed to implement the present invention and in the amount of time required to perform the operations. In the construction of airborne radar, especially, it is of great importance to reduce the amount of hardware and the amount of time required for radar signal processing. Very little space is available in an airplane considering the vast amount of computing required for a digital signal processor. Computing speed is of tremendous importance because of the speed of the airplane and its targets. The method of the present invention provides substantial improvements in both.

The method of the present invention is also more accurate than the Cooley-Tukey method. The Cooley-Tukey method requires many multiplications, the results of which must be rounded off to keep the same word size. In the present invention, most of the operations are simple additions which need not be scaled that often. The multiplications are for the W factors, which are rounded off but occur less frequently.

## Claims

1. Method of performing a fourier transformation with digital computing equipment in a signal processing system for processing pulse descriptor words, characterized by:

   a) mapping (34) the pulse descriptor words into a matrix;
   b) performing a first convolution (18) on one dimension of the matrix by

      b1) applying (46) a number theoretic transform to said matrix,
      b2) multiplying (48) the result of step b1) with a first 1-dimensional matrix ($H(k_1)$),
      b3) applying (50) an inverse number theoretic transform to the result of step b2),

   c) performing a second convolution (20) on another dimension of the matrix by

      c1) applying (66) a number theoretic transform to said matrix,
      c2) multiplying (68) the result of step c1) with a second 1-dimensional matrix ($H(k_2)$),
      c3) applying (70) an inverse number theoretic transform to the result of step c2).

2. Method according to claim 1, characterized by the additional step of multiplying (42,54,62,74) the pulse descriptor words by mixing factors before and after each convolution.

3. Method according to claim 1 or 2, characterized by the additional step of multiplying (58) the pulse descriptor words by a twiddle factor between the first and second convolutions (18,20).

4. Method according to any of the preceding claims, characterized by the additional step of multiplying (40,56,60,76) the pulse descriptor words by a chirp factor before and after each convolution.

**5.** Method according to any of the preceding claims, characterized by the additional steps of encoding and decoding (44,52,64,72) the pulse descriptor words before and after each convolution.

**6.** Method according to any of the preceding claims, characterized in that said first and second 1-dimensional matrices $(H(k_1), H(k_2))$ are obtained from unity matrices by encoding.

**7.** Method according to claim 6, characterized by the additional step of multiplying the unity matrices by chirp factors, respectively.

**8.** Method according to claim 6 or 7, characterized by the additional step of multiplying the unity matrices by up factors, respectively.

**9.** Method according to any of the preceding claims, characterized in that the number theoretic transforms (46,50,66,70) are based on Fermat numbers.

**Patentansprüche**

**1.** Verfahren zur Durchführung einer Fourier-Transformation mit einer digitalen Recheneinheit in einem Signalverarbeitungssystem zur Verarbeitung von Puls-Deskriptorworten, gekennzeichnet durch die Schritte:

    a) Abbilden (34) der Puls-Deskriptorworte in eine Matrix;

    b) Durchführen einer ersten Faltung (18) in einer Dimension der Matrix, durch die folgenden Operationen:

        b1) Anwenden (46) einer zahlentheoretischen Transformation auf die Matrix,

        b2) Multiplizieren (48) des Ergebnisses aus Schritt b1) mit einer ersten 1-dimensionalen Matrix $(H(k_1))$,

        b3) Anwenden (50) einer inversen zahlentheoretischen Transformation auf das Ergebnis aus Schritt b2),

    c) Durchführen einer zweiten Faltung (20) in einer anderen Dimension der Matrix, durch die folgenden Operationen:

        c1) Anwenden (66) einer zahlentheoretischen Transformation auf die Matrix,

        c2) Multiplizieren (68) des Ergebnisses aus Schritt c1) mit einer zweiten 1-dimensionalen Matrix $(H(k_2))$,

        c3) Anwenden (70) einer inversen zahlentheoretischen Transformation auf das Ergebnis aus Schritt c2).

**2.** Verfahren nach Anspruch 1, gekennzeichnet durch den zusätzlichen Schritt des Multiplizierens (42, 54, 62, 74) der Puls-Deskriptorworte vor und nach jeder Faltung mit Mischfaktoren.

**3.** Verfahren nach Anspruch 1 oder 2, gekennzeichnet durch den zusätzlichen Schritt des Multiplizierens (58) der Puls-Deskriptorworte zwischen der ersten und der zweiten Faltung (18, 20) mit einem Drehfaktor.

**4.** Verfahren nach einem der vorhergehenden Ansprüche, gekennzeichnet durch den zusätzlichen Schritt des Multiplizierens (40, 56, 60, 76) der Puls-Deskriptorworte vor und nach jeder Faltung mit einem Chirp-Faktor.

**5.** Verfahren nach einem der vorhergehenden Ansprüche, gekennzeichnet durch die zusätzlichen Schritte des Codierens und Decodierens (44, 52, 64, 72) der Puls-Deskriptorworte vor und nach jeder Faltung.

**6.** Verfahren nach einem der vorhergehenden Ansprüche, dadurch gekennzeichnet, daß die erste und die zweite 1-dimensionale Matrix $(H(k_1), H(K_2))$ durch Codieren aus Einheitsmatrizen gewonnen werden.

**7.** Verfahren nach Anspruch 6, gekennzeichnet durch den zusätzlichen Schritt des jeweiligen Multiplizierens der Einheitsmatrizen mit Chirp-Faktoren.

8. Verfahren nach Anspruch 6 oder 7, gekennzeichnet durch den zusätzlichen Schritt des jeweiligen Multiplizierens der Einheitsmatrizen mit Aufwärtsfaktoren.

9. Verfahren nach einem der vorhergehenden Ansprüche, dadurch gekennzeichnet, daß die zahlentheoretischen Transformationen (46, 50, 66, 70) auf Fermat'schen Zahlen basieren.

**Revendications**

1. Procédé pour effectuer une transformation de Fourier avec un équipement de calcul numérique dans un système de traitement de signal, pour traiter des mots de descripteurs d'impulsions, caractérisé en ce que :

    a) on arrange (34) les mots de descripteurs d'impulsions en une matrice;
    b) on effectue une première convolution (18) sur une dimension de la matrice, par les opérations suivantes :

        b1) on applique (46) à la matrice une transformation de la théorie des nombres,
        b2) on multiplie (48) le résultat de l'étape b1) par une première matrice unidimensionnelle ($H(k_1)$),
        b3) on applique (50) au résultat de l'étape b2) une transformation inverse de la théorie des nombres,

    c) on effectue une seconde convolution (20) sur une autre dimension de la matrice, par les opérations suivantes :

        c1) on applique (66) à la matrice une transformation de la théorie des nombres,
        c2) on multiplie (68) le résultat de l'étape c1) par une seconde matrice unidimensionnelle ($H(k_2)$),
        c3) on applique (70) une transformation inverse de la théorie des nombres au résultat de l'étape $c_2$).

2. Procédé selon la revendication 1, caractérisé par l'étape supplémentaire qui consiste à multiplier (42, 54, 62, 74) les mots de descripteurs d'impulsions par des facteurs de mélange, avant et après chaque convolution.

3. Procédé selon la revendication 1 ou 2, caractérisé par l'étape supplémentaire qui consiste à multiplier (58) les mots de descripteurs d'impulsions par un facteur de rotation entre les première et seconde convolutions (18, 20).

4. Procédé selon l'une quelconque des revendications précédentes, caractérisé par l'étape supplémentaire qui consiste à multiplier (40, 56, 60, 76) les mots de descripteurs d'impulsions par un facteur de modulation de fréquence avant et après chaque convolution.

5. Procédé selon l'une quelconque des revendications précédentes, caractérisé par les étapes supplémentaires qui consistent à coder et à décoder (44, 52, 64, 72) les mots de descripteurs d'impulsions avant et après chaque convolution.

6. Procédé selon l'une quelconque des revendications précédentes, caractérisé en ce que les première et seconde matrices unidimensionnelles ($H(k_1)$, $H(k_2)$) sont obtenues par codage à partir de matrices unités.

7. Procédé selon la revendication 6, caractérisé par l'étape supplémentaire qui consiste à multiplier respectivement les matrices unités par des facteurs de modulation de fréquence.

8. Procédé selon la revendication 6 ou 7, caractérisé par l'étape supplémentaire qui consiste à multiplier respectivement les matrices unités par des facteurs de conversion ascendante.

9. Procédé selon l'une quelconque des revendications précédentes, caractérisé en ce que les transformations de la théorie des nombres (46, 50, 66, 70) sont basées sur des nombres de Fermat.

*Fig.1*

INCOMING RADAR PULSES

10 — | ANTENNA |

12 — | ANALOG TO DIGITAL CONVERTER |

PULSE DESCRIPTOR WORDS IN THE TIME DOMAIN 30

14 — FAST FOURIER TRANSFORM ENGINE

16 — | WORD SORTING |

18 — | FIRST CONVOLUTION |

20 — | SECOND CONVOLUTION |

PULSE DESCRIPTOR WORDS IN THE FREQUENCY DOMAIN

22 — | FURTHER SIGNAL PROCESSING |

**Fig.2**

INCOMING PULSE DESCRIPTOR WORDS 30
IN THE TIME DOMAIN

16

WORD SORTING

→ BUFFERING —————→ REMAPPING INTO $N_1 \times N_2$ MATRIX

32       34

18

FIRST CONVOLUTION

CHIRP $\otimes$   UP $\otimes$ → ENCODING → FORWARD NUMBER THEORETIC TRANSFORM → $\otimes$ $H(\ell_1)$ → INVERSE NUMBER THEORETIC TRANSFORM → DECODING → DOWN $\otimes$ → CHIRP $\otimes$

$W_{N_1}^{\frac{n_1^2}{2}}$   $W_{2N_1}^{-n_1}$          $W_{2N_1}^{m_1}$   $W_{N_1}^{\frac{m_1^2}{2}}$

40   42   44   46   48   50   52   54   56

$W_{N_1 N_2}^{m_1 n_2}$ $\otimes$ TWIDDLE 58

20

SECOND CONVOLUTION

CHIRP $\otimes$   UP $\otimes$ → ENCODING → FORWARD NUMBER THEORETIC TRANSFORM → $\otimes$ $H(\ell_2)$ → INVERSE NUMBER THEORETIC TRANSFORM → DECODING → DOWN $\otimes$ → CHIRP $\otimes$

$W_{N_2}^{\frac{\pm n_2^2}{2}}$   $W_{2N_2}^{-n_2}$          $W_{2N_2}^{m_2}$   $W_{N_2}^{\frac{m_2^2}{2}}$

60   62   64   66   68   70   72   74   76

PULSE DESCRIPTOR WORDS IN THE FREQUENCY DOMAIN

INCOMING PULSE DESCRIPTOR WORDS 30
IN THE TIME DOMAIN

*Fig.3*

16 — WORD SORTING

36 — DOPPLER TUNING PROCESS

18

**FIRST CONVOLUTION**

CHIRP UP → ⊗ → ⊗ → ENCODING → FORWARD TRANSFORM → ⊗ → INVERSE TRANSFORM → DECODING → DOWN ⊗ → CHIRP ⊗

40   42   44   46   $H(k_1)$ 48   50   52   54   56

⊗

20

**SECOND CONVOLUTION**

CHIRP UP → ⊗ → ⊗ → ENCODING → FORWARD TRANSFORM → ⊗ → INVERSE TRANSFORM → DECODING → DOWN ⊗ → CHIRP ⊗

60   62   64   66   $H(k_2)$ 68   70   72   74   76

FIRST TIME          SECOND TIME

38 — PULSE COMPRESSION FILTER

TO FIRST CONVOLUTION 18

DECODED PULSE DESCRIPTOR WORDS
IN THE TIME DOMAIN